# EUROPÄISCHE PATENTANMELDUNG

(11) **EP 2 500 587 A1**
(43) Veröffentlichungstag der Anmeldung: **19.09.2012**
(21) Anmeldenummer: 12154221.1
(22) Anmeldetag: 07.02.2012
(51) Int. Cl.: F16B 37/04

(54) **Befestigungsvorrichtung zur Anordnung an einer Montageschiene**

(30) Priorität: 16.03.2011 DE 102011005598
(71) Anmelder: HILTI Aktiengesellschaft, 9494 Schaan (LI)
(72) Erfinder: Merhar, Thomas, 9494 Schaan (LI); Mugg, Peter, 6714 Nüziders (AT)

(57) **Zusammenfassung**

Bei einer Befestigungsvorrichtung (21) zur Anordnung an einer Montageschiene (11), umfassend ein Hintergreifteil (22) zum Einführen in eine Montageöffnung (15) und Hintergreifen von Rändern (14) der Montageöffnung (15) der Montageschiene (11), eine mit dem Hintergreifteil (22) zusammenwirkende Verspanneinrichtung (32), insbesondere Spannschraube (33), zum Verspannen der Befestigungsvorrichtung (21) an der Montageschiene (11), eine Anlageplatte (42) zur außenseitigen Anlage an der Montageschiene (11), die eine Durchführöffnung für zumindest ein Teil der Verspanneinrichtung (32) aufweist, eine Feder (51) als Druck- und Torsionsfeder, eine Halteeinrichtung (62) zwischen dem Hintergreifteil (22) und der Anlageplatte (42) zum Halten des Hintergreifteiles (22) in der vorgespannten Stellung, wobei beim Lösen der Halteeinrichtung (62) das Hintergreifteil (22) von der Feder (51) aus einer Einführstellung in eine die Ränder (14) der Montageöffnung (15) hintergreifende Hintergreifstellung überführbar ist mittels eines von der Feder (51) auf das Hintergreifteil (22) aufgebrachten Drehmomentes, soll die Feder (51) während der Herstellung einfach mit einem geringen Aufwand montiert werden können.

Diese Aufgabe wird dadurch gelöst, dass die Feder (51) an einer Drehfixierungsstelle zwischen einem ersten Ende (54) und einem zweiten Ende (55) der Feder (51) verdrehsicher bezüglich der Anlageplatte (42) gehalten ist.

## Beschreibung

Die vorliegende Erfindung betrifft eine Befestigungsvorrichtung gemäß dem Oberbegriff des Anspruches 1.

Im Gebiet der Haustechnik werden Schienensysteme eingesetzt an denen Leitungen, z. B. für Wasser-, Heizung-, Lüftung-, Klima- und/oder Elektroinstallationen, einfach über entsprechende Befestigungsvorrichtungen, wie beispielsweise mit Rohrschellen und Schienenmuttern festlegbar sind. An Schienensystemen werden auch Vorrichtungen zur Abhängung von Bauteilen vorgesehen, deren Stangenelemente ebenfalls mit geeigneten Befestigungsvorrichtungen an den Schienensystemen festlegbar sind. Zum Verbinden mehrerer Schienenelemente kommen ebenfalls Befestigungsvorrichtungen zum Einsatz, die beispielsweise Winkelelemente als Anlageplatten aufweisen.

Für ein solches Schienensystem wird oftmals eine so genannte C-förmige Montageschiene verwendet, wie sie beispielsweise aus der DE 87 15 256 U1 bekannt ist. Der von der Montageschiene umschlossene Innenraum ist über eine entlang der Längserstreckung der Montageschiene verlaufende Montageöffnung von außen her zugänglich, welche von Rändern seitlich begrenzt ist. Die Montageöffnung weist eine quer zu der Längserstreckung der Montageschiene verlaufende lichte Breite auf, die kleiner als die entsprechende Innenabmessung des Innenraums der Montageschiene ist. Aus der DE 10 2009 000 786 A1 ist eine gattungsbildende Befestigungsvorrichtung bekannt. Eine Feder als Druck- und Torsionsfeder ist bei der Montage nur sehr schwer zu handhaben, weil der der Druck- und der Torsionsabschnitt an der Feder nicht voneinander getrennt sind.

Die Aufgabe der vorliegenden Erfindung besteht deshalb darin, eine Befestigungsvorrichtung zur Verfügung zu stellen, bei der die Feder während der Herstellung einfach mit einem geringen Aufwand montiert werden kann.

Diese Aufgabe wird gelöst mit einer Befestigungsvorrichtung zur Anordnung an einer Montageschiene, umfassend ein Hintergreifteil zum Einführen in die Montageöffnung und Hintergreifen von Rändern der Montageöffnung der Montageschiene, eine mit dem Hintergreifteil zusammenwirkende Verspanneinrichtung, insbesondere Spannschraube, zum Verspannen der Befestigungsvorrichtung an der Montageschiene, eine Anlageplatte zur außenseitigen Anlage an der Montageschiene, die eine Durchführöffnung für zumindest ein Teil der Verspanneinrichtung aufweist, eine Feder als Druck- und Torsionsfeder, eine Halteeinrichtung zwischen dem Hintergreifteil und der Anlageplatte zum Halten des Hintergreifteiles in der vorgespannten Stellung, wobei beim Lösen der Halteeinrichtung das Hintergreifteil von der Feder aus einer Einführstellung in eine die Ränder der Montageöffnung hintergreifende Hintergreifstellung überführbar ist mittels eines von der Feder auf das Hintergreifteil aufgebrachten Drehmomentes, wobei die Feder an einer Drehfixierungsstelle zwischen einem ersten Ende und einem zweiten Ende der Feder verdrehsicher bezüglich der Anlageplatte gehalten ist. Die einteilige Drehfeder ist an der Drehfixierungsstelle verdrehsicher bezüglich der Anlageplatte gehalten, so dass an der Drehfeder ein Druckabschnitt von einem Torsionsabschnitt klar voneinander getrennt sind. Der Druckabschnitt dient somit nur als Druckfeder und der Torsionsabschnitt dient nur als Torsionsfeder. Dadurch ist die Montage der Feder an der Befestigungsvorrichtung wesentlich erleichtert.

Insbesondere weist die Feder ein erstes Ende und zweites Ende auf und die Feder weist zwischen der Drehfixierungsstelle und dem ersten Ende, insbesondere ausschließlich, einen Druckabschnitt als zweites Federelement auf, der als Druckfeder wirkt, und weist zwischen der Drehfixierungsstelle und dem zweiten Ende, insbesondere ausschließlich, einen Torsionsabschnitt als erstes Federelement auf, der als Torsionsfeder wirkt oder der als Torsionsfeder wirkt und zusätzlich eine Zugkraft aufbringen kann. Die Feder ist damit klar getrennt in einen Druckabschnitt der ausschließlich als Druckfeder oder Zugfeder wirkt und in einen Torsionsabschnitt der ausschließlich als Torsionsfeder wirkt. Bei der Montage der Feder braucht somit lediglich auf den Torsionsabschnitt ein Drehmoment aufgebracht werden zur Torsionsvorspannung des Torsionsabschnittes und auf den Druckabschnitt braucht lediglich eine Druckkraft zur Druckvorspannung des Druckabschnittes aufgebracht werden. An dem Druckabschnitt ist damit in vorteilhafter Weise bei der Montage keine Torsionsvorspannung aufzubringen und in gleicher Weise an dem Torsionsabschnitt keine Druckkraft aufzubringen bzw. erforderlich.

In einer weiteren Ausgestaltung ist das erste Ende im Bereich eines Schraubenkopfes der Spannschraube positioniert und das zweite Ende ist im Bereich des Hintergreifteiles positioniert und/oder die Feder liegt am zweiten Ende an dem Hintergreifteil auf und/oder die Feder ist mit dem Druck- und Torsionsabschnitt einteilig ausgebildet. Bei der einteiligen Feder mit dem Druck und Torsionsabschnitt, die an der Feder getrennt ausgebildet sind, braucht somit in vorteilhafter Weise nur eine Feder für die Befestigungsvorrichtung zur Verfügung gestellt werden. Dies erleichtert die Montage.

In einer ergänzenden Ausführungsform ist die Feder mit einer radialen Durchführung eines Federdrahtes durch eine Aussparung an einem zweiten Hülsenabschnitt der Anlageplatte verdrehsicher bezüglich der Anlageplatte gehalten. Die Feder als Schraubenfeder weist einen schraubenlinienförmigen Federdraht auf und der Federdraht ist durch eine Aussparung an den zweiten Hülsenabschnitt geführt. An dieser Aussparung liegt der Federdraht an dem Hülsenabschnitt auf und dadurch kann keine Verdrehung des Federdrahtes an der Aussparung ausgeführt werden, so dass dadurch der Federdraht an der Aussparung verdrehsicher gehalten ist.

Vorzugsweise weist der zweite Hülsenabschnitt der Anlageplatte einen ersten Abschnitt mit einem kleineren Durchmesser und einen zweiten Abschnitt mit einem größeren Durchmesser auf und der erste und zweite Abschnitt sind mit einem konischen Verjüngungsabschnitt des zweiten Hülsenabschnittes miteinander verbunden.

In einer Variante ist die Drehfixierungsstelle im Bereich des konischen Verjüngungsabschnittes ausgebildet.

Zweckmäßig liegt die Feder unter einer axialen Druckkraft auf dem konischen Verjüngungsabschnitt auf, so dass der Druckabschnitt der Feder in axialer Richtung an dem konischen Verjüngungsabschnitt endet.

In einer weiteren Ausführungsform ist mit dem Druckabschnitt der Feder kein Drehmoment auf das Hintergreifteil aufbringbar, da die Feder an der Drehfixierungsstelle verdrehsicher bezüglich der Anlageplatte gehalten ist.

Insbesondere ist ausschließlich mit dem Torsionsabschnitt der Feder auf das Hintergreifteil ein Drehmoment aufbringbar.

In einer weiteren Ausgestaltung ist die Feder als eine Schraubenfeder, insbesondere mit einem kleineren Durchmesser an dem Druckabschnitt als zweites Federelement und einem größeren Durchmesser an dem Torsionsabschnitt als erstes Federelement, ausgebildet.

Zweckmäßig ist an der Anlageplatte zumindest ein Anschlagelement mit einer Anschlagsfläche zur Begrenzung der Verdrehbarkeit des Hintergreifteils vorgesehen ist.

In einer weiteren Ausgestaltung ragt das zumindest eine Anschlagelement von der dem Hintergreifteil zugewandten Anlageseite der Anlageplatte ab.

In einer Variante ist die Halteeinrichtung für das Hintergreifteil an dem Anschlagelement vorgesehen.

In einer zusätzlichen Ausführungsform ist zwischen der Halteeinrichtung und einer freien Endseite des Anschlagelementes eine Führungskontur für das Hintergreifteil vorgesehen.

Vorzugsweise ist an einer der Anlageplatte zugewandten Seite des Hintergreifteils ein erster, zylinderförmiger Hülsenabschnitt und an einer dem Hintergreifteil zugewandten Anlageseite der Anlageplatte ein zweiter, die Durchführöffnung umgebender zylinderförmiger zweiter Hülsenabschnitt vorgesehen ist, wobei der erste Hülsenabschnitt und der zweite Hülsenabschnitt teleskopierbar zueinander angeordnet sind und wobei das zumindest eine Anschlagelement am zweiten Hülsenabschnitt der Anlageplatte vorgesehen ist.

In einer weiteren Ausgestaltung umfasst das Anschlagelement zumindest ein erstes Rastmittel zur Ausrichtung des Hintergreifteils in seiner Einführstellung und zumindest ein zweites Rastmittel zur Ausrichtung des Hintergreifteils in seiner Hintergreifstellung, wobei an dem Hintergreifteil zumindest ein Gegenrastmittel zum Einrasten in die Rastmittel entsprechend der Ausrichtung des Hintergreifteils vorgesehen ist.

Insbesondere ist ein zweites Federelement zwischen einem Abschnitt der Verspanneinrichtung an ihrem dem Hintergreifteil abgewandten Ende und der Anlageplatte zur Federbeaufschlagung eines mit dem Hintergreifteil verbundenen Teils der Verspanneinrichtung in Richtung des dem Hintergreifteil abgewandten Endes vorgesehen.

Im Nachfolgenden wird ein Ausführungsbeispiel der Erfindung unter Bezugnahme auf die beigefügte Zeichnung näher beschrieben. Es zeigt:
- Fig. 1: eine Befestigungsvorrichtung zum Verbinden zweier Montageschienen,
- Fig. 2: eine an einer Montageschiene angeordnete Befestigungsvorrichtung in einer Ansicht,
- Fig. 3: ein Hintergreifteil der in Fig. 2 gezeigten Befestigungsvorrichtung,
- Fig. 4: das Hintergreifteil gemäß Fig. 3 in einer Seitenansicht,
- Fig. 5: einen Schnitt durch eine Anlageplatte der in Fig. 2 gezeigten Befestigungsvorrichtung und
- Fig. 6: eine perspektivische Ansicht nur des zweiten Hülsenabschnittes der Anlageplatte gemäß Fig. 5 mit einer Feder.

Die Montageschienen 11 weisen jeweils zwei einander gegenüberliegende Seitenwände 12, eine diese Seitenwände 12 verbindende Rückwand 13 sowie dieser Rückwand 13 gegenüberliegend eine von Rändern 14 begrenzte, in der Längserstreckung der Montageschiene 11 verlaufende Montageöffnung 15 auf. Die Montageöffnung 15 weist eine quer zu der Längserstreckung der Montageschiene 11 verlaufende lichte Breite C auf, welche durch die nach innen umgebogenen freien Enden der Ränder 14 definiert ist. Jede Montageschiene 11 umgibt einen Innenraum, der durch die Montageöffnung 15 von außen her zugänglich ist.

Die Befestigungsvorrichtung 21 weist ein Hintergreifteil 22 mit einer Breite B, die kleiner als die lichte Breite C der Montageöffnung 15 in der Montageschiene 11 ist, und eine Länge L auf, die grösser als die lichte Breite C der Montageöffnung 15 in der Montageschiene 11 ist. An seinen Spannflächen 23 ist das Hintergreifteil 22 mit Zahnungen für einen verbesserten Eingriff mit den optional ebenfalls mit einer Zahnung versehenen freien Enden der Ränder 14 der Montageöffnung 15 versehen. Von der Seite des Hintergreifteils 22 mit den Spannflächen 23 ragt ein erster, zylinderförmiger Hülsenabschnitt 24 ab, der eine mit einem Innengewinde versehene, durchgängig ausgebildete Öffnung 25 zum Festlegen einer Spannschraube 33 als Verspanneinrichtung 32 an dem Hintergreifteil 22 ausbildet. Die mit dem Hintergreifteil 22 verbundene Spannschraube 33 weist eine Längsachse 34 auf und dient dem Verspannen der Befestigungsvorrichtung 21 an der Montageschiene 11. Von dem freien Rand des ersten Hülsenabschnitts 24 ragen nach radial außen zwei einander diametral gegenüberliegende Nasen als Gegenrastmittel 26 ab.

Weiter umfasst die Befestigungsvorrichtung 21 ein Winkelelement als Anlageplatte 42, die bei der Anordnung der Befestigungsvorrichtung 21 an der Montageschiene 11 mit ihrer Anlageseite 43 mit der, der Montageöffnung 15 benachbarten Außenseite der Montageschiene 11 in Anlage kommt und diese somit stirnseitig beaufschlagt. Der Anlageseite 43 gegenüberliegend weist die Anlageplatte 42 eine Spannfläche 45 auf. Die Anlageplatte 42 ist weiter mit Durchführöffnungen 44 zur Durchführung des Schafts 35 der Spannschraube 33 versehen, wobei der Schaft 35 frei drehbar in diesen Durchführöffnungen 44 angeordnet ist. Von der im zusammengebauten Zustand der Befestigungsvorrichtung 21 dem Hintergreifteil 22 zugewandten Anlageseite 43 der Anlageplatte 42 ragt ein zweiter, die Durchführöffnung 44 umgebender zylinderförmiger zweiter Hülsenabschnitt 46 ab. Im zusammengebauten Zustand der Befestigungsvorrichtung 21 laufen der erste Hülsenabschnitt 24 am Hintergreifteil 22 und der zweite Hülsenabschnitt 46 der Anlageplatte 42 telekopierbar ineinander, so dass das Hintergreifteil 22 an der Anlageplatte 42 sicher geführt ist.

Zwischen der Anlageplatte 42 und dem Hintergreifteil 22 ist eine Feder 51 als Schraubenfeder angeordnet. Weiter ist eine Halteeinrichtung 62 zwischen dem Hintergreifteil 22 und der Anlageplatte 42 zum Halten des Hintergreifteils 22 in einer vorgespannten Stellung vorgesehen, welche der Einführstellung des Hintergreifteils 22 entspricht. Die Halteeinrichtung 62 ist einerseits von einer ersten Einkerbung 63, die gleichzeitig ein erstes Rastmittel 48 eines Anschlagelementes 47 zur Ausrichtung des Hintergreifteils 22 in seiner Einführstellung ausbildet, am freien Rand des zweiten Hülsenabschnitts 46 an der Anlageplatte 42 und andererseits von den Nasen als Gegenrastmittel 26 am ersten Hülsenabschnitt 24 des Hintergreifteils 22 gebildet. Das Anschlagelement 47 ragt von der dem Hintergreifteil 22 zugewandten Anlageseite 43 der Anlageplatte 42 ab. Die Anschlagsfläche 50 wird hier von dem Seitenrand eine zweiten Einkerbung 64 ausgebildet, welche am freien Rand des zweiten Hülsenabschnitts 46, beabstandet zu dem ersten Rastmittel 48 als zweites Rastmittel 49 zur Ausrichtung des Hintergreifteils 22 in seiner Hintergreifstellung vorgesehen ist. Die zweite Einkerbung 64 weist eine Tiefe auf, die tiefer als die Tiefe der ersten Einkerbung 63 der Halteeinrichtung 62 bzw. des ersten Rastmittels 48 jeweils ausgehend vom freien Rand des zweiten Hülsenabschnitts 46 ist. Die Halteeinrichtung 62 für das Hintergreifteil 22 ist somit an dem Anschlagelement 47 vorgesehen. Diametral gegenüberliegend von dem Anschlagelement 47 ist ein zweites, hier nicht dargestelltes Anschlagelement 47 an dem zweiten Hülsenabschnitt 46 der Anlageplatte 42 vorgesehen. Wie zuvor dargelegt, bilden die vom freien Rand des Hülsenabschnitts 24 des Hintergreifteils 22 nach radial außen abragenden Nasen die Gegenrastmittel 26 zum Einrasten in die Rastmittel 48 bzw. 49 entsprechend der Ausrichtung beziehungsweise Stellung des Hintergreifteils 22.

Zwischen einem Schraubenkopf 36 und dem Hintergreifteil 22 ist die Feder 51 angeordnet. Die einteilige Feder 51 weist ein erstes Federelement 52 als Torsionsfeder und ein zweites Federelement 57 als Druckfeder auf. Das erste Federelement 52 bildet somit einen Torsionsabschnitt 59 bzw. Drehbereich 59 der Feder 51 und das zweite Federelement 57 bildet einen Druckabschnitt 58 der Feder 51. Das unterhalb der Anlageplatte 42 angeordnete, dem Hintergreifteil 22 zugewandte Federelement 52 bildet den Drehbereich 59 bzw. Torsionsabschnitt 59 und das oberhalb der Anlageplatte 42 angeordnete, dem Hintergreifteil 22 abgewandte zweite Federelement 57 bildet den Druckbereich 58 der einteiligen Feder 51.

Beim Einführen des Hintergreifteils 22 in die Montageöffnung 15 ist dieses durch die Halteeinrichtung 62 in einer Einführstellung gehalten. Durch Druck auf den Schraubenkopf 36 in Richtung der Anlageplatte 42 entgegen der von dem Druckabschnitt 58 auf den Schraubenkopf 36 und auf die Anlageplatte 42 auf einem konischen Verjüngungsabschnitt 39 aufgebrachten Druckkraft wird die Druckabschnitt 58 der Feder 51 axial gestaucht, die Spannschraube 33 mit dem Hintergreifteil 22 nach unten bewegt und es wird der Eingriff der Anlageplatte 42 mit dem Hintergreifteil 22 gelöst, so dass das Hintergreifteil 22 automatisch aufgrund der Torsionsvorspannung des Torsionsabschnittes 59 von dem erste Federelement 52 in seine Hintergreifstellung zum Hintergreifen der Ränder 14 der Montageöffnung 15 verdreht wird. Das zweite Ende 55 der Feder 51 ist am Hintergreifteil 22 eingehängt und/oder es besteht eine feste Verbindung zwischen einem zweiten Ende 55 der Feder 51 und dem Hintergreifteil 22. Ein Rand der Einkerbung 64, die das zweite Rastmittel 49 ausbildet, bildet die Anschlagfläche 50 des Anschlagelementes 47 und verhindert ein Überdrehen des Hintergreifteils 22 in eine Stellung relativ zu den Rändern 14 der Montageöffnung 15, welche keine optimale Verspannung der Befestigungsvorrichtung 21 an der Montageschiene 11 ermöglicht beziehungsweise gewährleistet. In dieser Vormontagestellung ist die Befestigungsvorrichtung 21 hemmend an der Montageschiene 11 gehalten, jedoch weiterhin entlang der Montageöffnung 15 für eine Umpositionierung oder Justierung verschiebbar. Um die Befestigungsvorrichtung 21 an der Montageschiene 11 zu verspannen, wird die Spannschraube 33 in das Hintergreifteil 22 eingeschraubt, wobei das Hintergreifteil 22 in Richtung der Anlageplatte 42 versetzt wird und dabei mit den freien Enden der Ränder 14 der Montageöffnung 15 in Anlage kommt. Die Tiefe der zweiten Einkerbung 64 ist derart gewählt, dass ein ausreichend großer Weg für den axialen Versatz des Hintergreifteils 22 beim Verspannvorgang zur Verfügung steht.

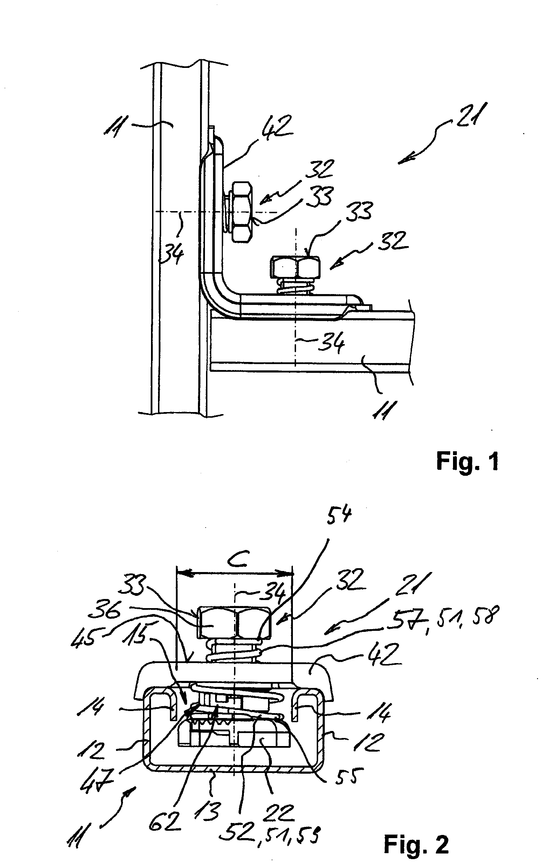

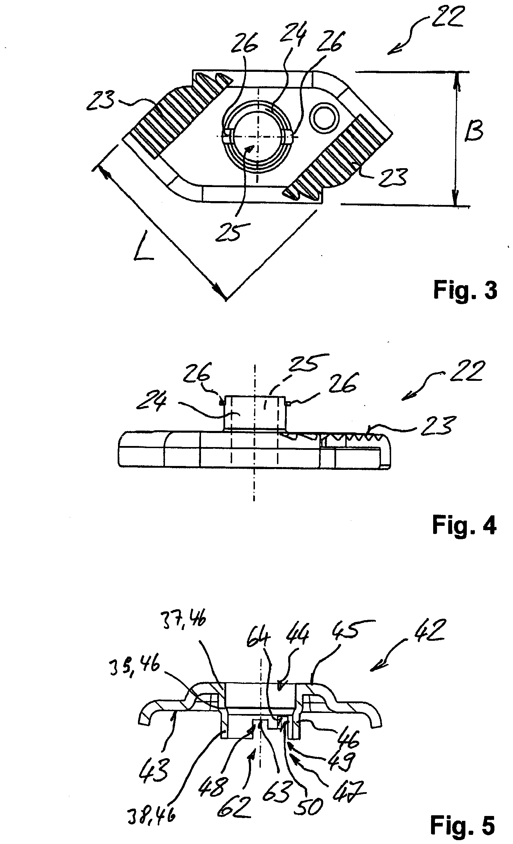

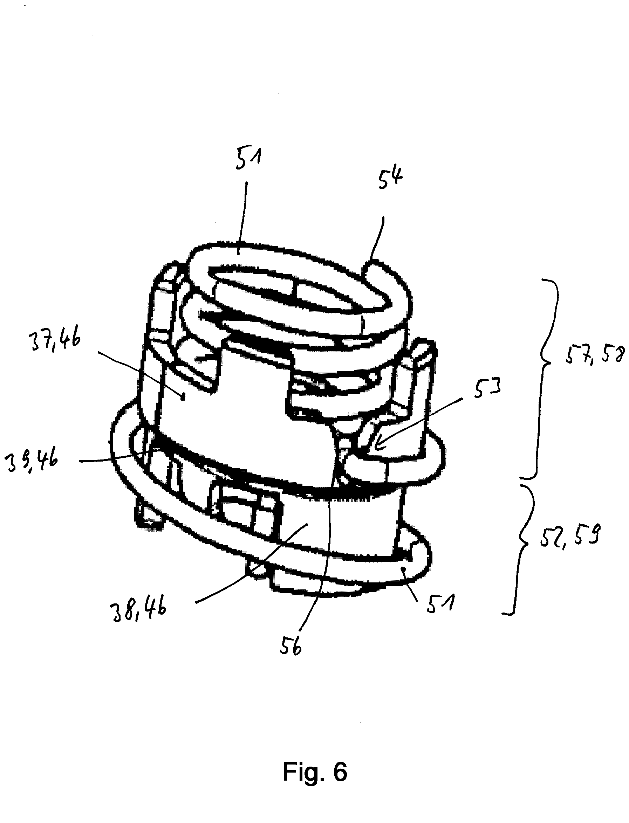

Der zweite Hülsenabschnitt 46 der Anlageplatte 42 umfasst einen ersten Abschnitt 37 und einen zweiten Abschnitt 38. Der im Querschnitt kreisförmige Hülseabschnitt 46 weist an dem ersten Abschnitt 37 einen größeren Durchmesser auf als dem zweiten Abschnitt 38. Der erste und zweite Abschnitt 37, 38 sind durch den konischen Verjüngungsabschnitt 39 des zweiten Hülsenabschnitts 46 miteinander verbunden (Fig. 5 und 6). Der Druckabschnitt 58 des zweiten Federelementes 57 der einteiligen Feder 51 liegt an einem Ende auf dem konischen Verjüngungsabschnitt 39 auf und an einem ersten Ende 54 der Feder 51 liegt der Schraubenkopf 36 auf. Der zweite Hülsenabschnitt 56 weist eine Aussparung 56 auf (Fig. 6) und durch die Aussparung 56 ist der Federdraht der Feder 51 von dem Druckabschnitt 58 innerhalb eines von dem Hülsenabschnitt 24 eingeschlossenen Innenraumes, nämlich der Durchführöffnung 44, zu einem Außenraum außerhalb radial des zweiten Hülsenabschnittes 46 geführt. Unterhalb der Aussparung 56 gemäß der Darstellung in Fig. 6 bildet die Feder 51 den Torsionsabschnitt 59 als erstes Federelement 52. Das zweite Ende 55 der Feder 51 an dem Torsionsabschnitt 59 endet an dem Hintergreifteil 22 (Fig. 2) und ist am Hintergreifteil 22 eingehängt, damit mit dem zweiten Ende 55 ein Drehmoment auf das Hintergreifteil 22 aufgebracht werden kann zur Verdrehung des Hintergreifteiles 22 um einen Drehwinkel vom im Wesentlichen 90°. Die Feder 51 weist somit einen Druckabschnitt 58 auf, der ausschließlich als Druckfeder fungiert und einen Torsionsabschnitt 59, der ausschließlich als Torsionsfeder und gegebenenfalls zusätzlich auch als Zugfeder wirkt. An der Aussparung 56 liegt somit die Feder 51 auf dem zweiten Hülsenabschnitt 46 auf und dadurch bildet sich an der Feder 51 im Bereich der Aussparung 56 eine Drehfixierungsstelle 53, an welcher die Feder 51 verdrehsicher bezüglich der Anlageplatte 42 gehalten ist, weil an der Anlageplatte 42 einteilig mit dieser der zweite Hülsenabschnitt 46 ausgebildet ist.

Insgesamt betrachtet sind mit der erfindungsgemäßen Befestigungsvorrichtung 21 wesentliche Vorteile verbunden. Die Feder 51 ist an der Drehfixierungsstelle 53 aufgrund der Durchführung durch die Aussparung 56 des zweiten Hülsenabschnittes 46 im Bereich des konischen Verjüngungsabschnittes 39 verdrehsicher bezüglich der Anlageplatte 42 gehalten. Dadurch wirkt an der Feder 51 das zweite Federelement 57 zwischen dem ersten Ende 54 und der Drehfixierungsstelle 53 bzw. der Aussparung 56 ausschließlich als Druckfeder und das erste Federelement 52 zwischen der Drehfixierungsstelle 53 bzw. der Aussparung 56 und dem zweiten Ende 55 der Feder 51 ausschließlich als Torsionsfeder. Bei der Montage der Befestigungsvorrichtung 51 braucht somit auf den Torsionsabschnitt 59 keine Druckkraft, sondern lediglich ein Drehmoment zur Torsionsvorspannung des Torsionsabschnittes 59 aufgebracht werden und auf den Druckabschnitt 58 braucht bei der Montage der Befestigungsvorrichtung 21 nur eine Druckkraft, jedoch kein Drehmoment, aufgebracht werden. Dadurch ist die Montage der einteiligen Feder 51 mit dem Druck und Torsionsabschnitt 58, 59 wesentlich erleichtert.

## Patentansprüche

1. Befestigungsvorrichtung (21) zur Anordnung an einer Montageschiene (11), umfassend
- ein Hintergreifteil (22) zum Einführen in eine Montageöffnung (15) und Hintergreifen von Rändern (14) der Montageöffnung (15) der Montageschiene (11),
- eine mit dem Hintergreifteil (22) zusammenwirkende Verspanneinrichtung (32), insbesondere Spannschraube (33), zum Verspannen der Befestigungsvorrichtung (21) an der Montageschiene (11),
- eine Anlageplatte (42) zur außenseitigen Anlage an der Montageschiene (11), die eine Durchführöffnung (44) für zumindest ein Teil der Verspanneinrichtung (32) aufweist,
- eine Feder (51) als Druck- und Torsionsfeder,
- eine Halteeinrichtung (62) zwischen dem Hintergreifteil (22) und der Anlageplatte (42) zum Halten des Hintergreifteiles (22) in der vorgespannten Stellung, wobei beim Lösen der Halteeinrichtung (62) das Hintergreifteil (22) von der Feder (51) aus einer Einführstellung in eine die Ränder (14) der Montageöffnung (15) hintergreifende Hintergreifstellung überführbar ist mittels eines von der Feder (51) auf das Hintergreifteil (22) aufgebrachten Drehmomentes,
**dadurch gekennzeichnet, dass**
die Feder (51) an einer Drehfixierungsstelle (53) zwischen einem ersten Ende (54) und einem zweiten Ende (55) der Feder (51) verdrehsicher bezüglich der Anlageplatte (42) gehalten ist.

2. Befestigungsvorrichtung nach Anspruch 1,
**dadurch gekennzeichnet, dass**
die Feder (51) zwischen der Drehfixierungsstelle (53) und dem ersten Ende (54), insbesondere ausschließlich, einen Druckabschnitt (58) als zweites Federelement (57) aufweist, der als Druckfeder wirkt, und zwischen der Drehfixierungsstelle (53) und dem zweiten Ende (55), insbesondere ausschließlich, einen Torsionsabschnitt (59) als erstes Federelement (52) aufweist, der als Torsionsfeder wirkt.

3. Befestigungsvorrichtung nach Anspruch 2,
**dadurch gekennzeichnet, dass**
das erste Ende (54) im Bereich eines Schraubenkopfes (36) der Spannschraube (33) positioniert ist und das zweite Ende (55) im Bereich des Hintergreifteiles (22) positioniert ist und/oder die Feder (51) am zweiten Ende (55) an dem Hintergreifteil (22) eingehängt ist oder/und am Hintergreifteil (22) aufliegt
und/oder
die Feder (51) mit dem Druck- und Torsionsabschnitt (58, 59) einteilig ausgebildet ist.

4. Befestigungsvorrichtung nach einem oder mehreren der vorhergehenden Ansprüche,
**dadurch gekennzeichnet, dass**
die Feder (51) mit einer radialen Durchführung eines Federdrahtes durch eine Aussparung (56) an einem zweiten Hülsenabschnitt (46) der Anlageplatte (42) verdrehsicher bezüglich der Anlageplatte (42) gehalten ist.

5. Befestigungsvorrichtung nach einem oder mehreren der vorhergehenden Ansprüche,
**dadurch gekennzeichnet, dass**
der zweiten Hülsenabschnitt (46) der Anlageplatte (42) einen ersten Abschnitt (37) mit einem kleineren Durchmesser und einen zweiten Abschnitt (38) mit einem größeren Durchmesser aufweist und der erste und zweite Abschnitt (37, 38) mit einem konischen Verjüngungsabschnitt (39) des zweiten Hülsenabschnittes (46) miteinander verbunden sind.

6. Befestigungsvorrichtung nach Anspruch 5,
**dadurch gekennzeichnet, dass**
die Drehfixierungsstelle (53) im Bereich des konischen Verjüngungsabschnittes (39) ausgebildet ist.

7. Befestigungsvorrichtung nach Anspruch 4 oder 5,
**dadurch gekennzeichnet, dass**
die Feder (51) unter einer axialen Druckkraft auf dem konischen Verjüngungsabschnitt (39) aufliegt, so dass der Druckabschnitt (58) der Feder (51) in axialer Richtung an dem konischen Verjüngungsabschnitt (39) endet.

8. Befestigungsvorrichtung nach einem oder mehreren der Ansprüche 2 bis 7,
**dadurch gekennzeichnet, dass**
mit dem Druckabschnitt (58) der Feder (51) kein Drehmoment auf das Hintergreifteil (22) aufbringbar ist, da die Feder (51) an der Drehfixierungsstelle (53) verdrehsicher bezüglich der Anlageplatte (42) gehalten ist.

9. Befestigungsvorrichtung nach einem oder mehreren der Ansprüche 2 bis 8,
**dadurch gekennzeichnet, dass**
ausschließlich mit dem Torsionsabschnitt (59) der Feder (51) auf das Hintergreifteil (22) ein Drehmoment aufbringbar ist.

10. Befestigungsvorrichtung nach einem oder mehreren der vorhergehenden Ansprüche,
**dadurch gekennzeichnet, dass**
die Feder (51) als eine Schraubenfeder, insbesondere mit einem kleineren Durchmesser an dem Druckabschnitt (58) als zweites Federelement (57) und einem größeren Durchmesser an dem Torsionsabschnitt (59) als erstes Federelement (52), ausgebildet ist.
